# EUROPÄISCHE PATENTSCHRIFT

(11) **EP 4 377 170 B1**
(45) Veröffentlichungstag und Bekanntmachung des Hinweises auf die Patenterteilung: **10.09.2025**
(21) Anmeldenummer: 22751094.8
(22) Anmeldetag: 18.07.2022
(51) Int. Cl.: B60T 1/10, B60T 13/66, B60T 13/74, B60T 17/18, B60T 17/22

(54) **REDUNDANTES ELEKTROMECHANISCHES BREMSSYSTEM SOWIE AKTUATOR DAFÜR**
REDUNDANT ELECTROMECHANICAL BRAKING SYSTEM AND ACTUATOR THEREFOR
SYSTÈME DE FREINAGE ÉLECTROMÉCANIQUE REDONDANT ET SON ACTIONNEUR

(30) Priorität: 30.07.2021 DE 102021119939
(43) Veröffentlichungstag der Anmeldung: 05.06.2024
(73) Patentinhaber: KNORR-BREMSE Systeme für Nutzfahrzeuge GmbH, 80809 München (DE)
(72) Erfinder: GEIS-ESSER, Daniel, 81377 München (DE); MEDERER, Martin, 92318 Neumarkt (DE); SCHÖFBERGER, Tobias, 84048 Mainburg (DE); THEIL, Robert, 82299 Türkenfeld (DE)
(86) Internationale Anmeldenummer: PCT/EP2022/070068
(87) Internationale Veröffentlichungsnummer: WO 2023/006477

(56) Entgegenhaltungen:
- EP-A1- 1 557 317
- EP-A1- 1 584 532
- EP-A1- 3 142 905
- EP-A1- 3 160 807
- EP-A1- 3 623 242
- EP-B1- 3 142 905
- EP-B1- 3 160 807
- WO-A1-2006/058825
- DE-A1- 10 036 287
- DE-A1- 102007 021 286
- DE-A1- 102011 084 534
- DE-A1- 102018 216 669
- DE-T5- 112018 006 055

## Beschreibung

Die vorliegende Erfindung betrifft ein elektromechanisches Bremssystem für ein Fahrzeug, aufweisend wenigstens einen ersten Aktuator sowie wenigstens eine erste Energieversorgungseinrichtung wobei dem ersten Aktuator eine der Energieversorgungseinrichtungen als Primärquelle zur Versorgung mit elektrischer Energie zugeordnet ist und der erste Aktuator eine Verbindung zu dieser als Primärquelle zugeordneten Energieversorgungseinrichtung aufweist. Darüber hinaus betrifft die vorliegende Erfindung einen Aktuator, insbesondere eine elektromechanische Bremseinrichtung für ein Fahrzeug, die eine Energieaufnahmeeinrichtung zum Anschluss an eine Energieversorgungseinrichtung aufweist. Die Erfindung betrifft darüber hinaus ein Fahrzeug, einen Anhänger sowie eine Nutzfahrzeugkombination, die ein derartiges Bremssystem und/oder einen derartigen Aktuator aufweisen.

Fahrzeuge mit elektromechanischen Bremssystemen weisen als Aktuatoren beispielsweise mehrere elektromechanische Bremseinrichtungen auf, die jeweils gruppenweise von unterschiedlichen Energieversorgungseinrichtungen mit Energie zum Betrieb versorgt werden. Beispielsweise werden die Bremseinrichtungen, die an einer Vorderachse des Fahrzeugs befestigt sind, von einer ersten Energieversorgungseinrichtung mit Energie versorgt und die Bremseinrichtungen, die an einer Hinterachse des Fahrzeugs befestigt sind, von einer zweiten Energieversorgungseinrichtung mit Energie versorgt.

Fällt die Energieversorgung an wenigstens einer der Bremseinrichtungen aus, beispielsweise durch einen Kabelbruch in einem Verteilnetz der zugeordneten Energieversorgungseinrichtung, dann kann diese Bremseinrichtung nicht mehr für eine Bremsung verwendet werden. Dadurch ist die Bremsleistung des Bremssystems reduziert. Insbesondere dann, wenn nur noch Bremseinrichtungen mit Energie versorgt werden, die an Rädern sitzen, die durch den Bremsvorgang entlastet werden, stellt dies ein erhöhtes Sicherheitsrisiko dar, da dadurch die maximal übertragbare Bremskraft erheblich reduziert ist und damit eine ausreichende Verzögerung des Fahrzeuges nicht mehr gewährleistet werden kann.

Aus der DE 100 36 287 A1 ist es bekannt, Steuereinrichtungen für hydraulische Bremseinrichtungen an unterschiedlichen Fahrzeugachsen aus voneinander unabhängigen Energiekreisen mit elektrischer Energie zu versorgen.

In DE 10 2007 021 286 A1 wird vorgeschlagen, eine redundante Energieversorgung für Bremseinrichtungen mittels einer Haupt-Energiversorgungseinheit und zweier zusätzlicher Not-Energieversorgungseinheiten zu realisieren.

Aus der DE 10 2011 084 534 A1 ist ein elektronisches Steuergerät für ein Bremssystem eines Kraftfahrzeugs bekannt, das zwei oder mehr unabhängige Recheneinheiten aufweist, denen jeweils eine Stromversorgung zugeordnet ist.

Vor diesem Hintergrund ist es Aufgabe der vorliegenden Erfindung, die Betriebssicherheit eines elektromechanischen Bremssystems, eines Aktuators, eines Fahrzeugs, eines Anhängers und/oder einer Nutzfahrzeugkombination zu verbessern.

Die Aufgabe wird durch ein elektromechanisches Bremssystem mit den Merkmalen des Patentanspruchs 1, einen Aktuator mit den Merkmalen des Patentanspruchs 12, ein Fahrzeug mit den Merkmalen des Patentanspruchs 14, einen Anhänger mit den Merkmalen des Patentanspruchs 17 und eine Nutzfahrzeugkombination mit den Merkmalen des Patentanspruchs 18 gelöst. Vorteilhafte Ausgestaltungen sind Gegenstand der Unteransprüche.

Zur Lösung der Aufgabe wird ein elektromechanisches Bremssystem für ein Fahrzeug vorgeschlagen, das wenigstens einen ersten Aktuator wenigstens eine erste Energieversorgungseinrichtung und eine zweite Energieversorgungseinrichtung aufweist, wobei dem ersten Aktuator eine der Energieversorgungseinrichtungen als Primärquelle zur Versorgung mit elektrischer Energie zugeordnet ist und der erste Aktuator eine Verbindung zu dieser als Primärquelle zugeordneten Energieversorgungseinrichtung aufweist. Der erste Aktuator weist zusätzlich eine Verbindung zu einer ihm als Sekundärquelle zugeordneten Energieversorgungseinrichtung zur Versorgung des ersten Aktuators mit elektrischer Energie der als Primärquelle zugeordneten Energieversorgungseinrichtung auf.

Somit sind für den Aktuator zwei voneinander unabhängige Energieversorgungseinrichtungen zur Versorgung des Aktuators mit elektrischer Energie vorhanden. Fällt eine der Energieversorgungseinrichtungen aus, dann versorgt die andere den Aktuator mit Energie. Dadurch ist der erste Aktuator auch einsetzbar, wenn er von seiner Primärquelle keine Energie erhält. Dies erhöht die Betriebssicherheit eines mit einem derartigen Bremssystem versehenen Fahrzeugs.

In einer weiteren Ausführungsform weist das Bremssystem wenigstens einen zweiten Aktuator auf, dem eine der Energieversorgungseinrichtungen als Primärquelle zur Versorgung mit elektrischer Energie zugeordnet ist, wobei der zweite Aktuator eine Verbindung zu dieser als Primärquelle zugeordneten Energieversorgungseinrichtung aufweist, und wobei der zweite Aktuator zusätzlich eine Verbindung zu einer ihm als Sekundärquelle zugeordneten Energieversorgungseinrichtung zur Versorgung des Aktuators mit elektrischer Energie der als Primärquelle zugeordneten Energieversorgungseinrichtung aufweist.

Somit sind für jeden Aktuator zwei voneinander unabhängige Energieversorgungseinrichtungen vorhanden. Dies verbessert die Betriebssicherheit, indem Ausfälle vermieden oder wenigstens ihre Auswirkungen, insbesondere Verlust der Bremskraft, abgemildert werden.

In einer weiteren Ausführungsform ist wenigstens einem der Aktuatoren jeweils eine der Energieversorgungseinrichtungen die ihm nicht als Primärquelle zugeordnet ist als Sekundärquelle zugeordnet.

Wenn das Bremssystem beispielsweise eine erste Energieversorgungseinrichtung und eine zweite Energieversorgungseinrichtung aufweist, dann können die Aktuatoren beispielsweise in erste und zweite Aktuatoren unterteilt werden, wobei den ersten Aktuatoren die erste Energieversorgungseinrichtung als Primärquelle zugeordnet ist und den zweiten Aktuatoren die zweite Energieversorgungseinrichtung als Primärquelle zugeordnet ist. Die jeweils andere Energieversorgungseinrichtung ist den Aktuatoren dann jeweils als Sekundärquelle zugeordnet. Dadurch kann mit den bereits bestehenden Energieversorgungseinrichtungen eine zusätzliche Redundanz der Energieversorgung für die Aktuatoren erreicht werden.

In einer weiteren Ausführungsform weist wenigstens einer der Aktuatoren eine primäre Energieaufnahmeeinrichtung und eine sekundäre Energieaufnahmeeinrichtung, jeweils zur Verbindung mit einer Energieversorgungseinrichtung, auf.

Dadurch wird die Verbindung mit den Energieversorgungseinrichtungen vereinfacht. Insbesondere kann jede der Energieaufnahmeeinrichtungen für unterschiedliche Eigenschaften der damit zu verbindenden Energieversorgungseinrichtung eingerichtet und/oder ausgelegt sein.

In einer weiteren Ausführungsform weist wenigstens eine der Energieaufnahmeeinrichtungen einen Signaleingang zur Aufnahme eines Steuersignals zur Steuerung des Aktuators auf.

In bestimmten Fällen, beispielsweise bei Verwendung eines CAN-Bus, können so Signale zur Steuerung des Aktuators zusammen mit der benötigten Energie über dieselbe Verbindung übertragen werden.

In einer weiteren Ausführungsform ist die den Signaleingang aufweisende Energieaufnahmeeinrichtung zur Aufnahme einer Leistung eingerichtet, die kleiner ist als die Leistung, zu deren Aufnahme die jeweils andere Energieaufnahmeeinrichtung eingerichtet ist.

Gegebenenfalls ist die über eine Verbindung, beispielsweise über einen CAN-Bus, übertragbare Leistung begrenzt. Die den Signaleingang aufweisende Energieaufnahmeeinrichtung begrenzt beispielsweise den von ihr aufnehmbaren Strom, um die Verbindung nicht zu beschädigen und die damit verbundene Energieversorgungseinrichtung nicht zu beschädigen. Dies erhöht weiter die Betriebssicherheit.

In einer weiteren Ausführungsform ist wenigstens einem der Aktuatoren eine Rekuperationseinrichtung als Sekundärquelle zugeordnet.

Dadurch, dass bei einem Ausfall die Energie für den Betrieb der Aktuatoren, die eine Bremswirkung entfalten, ebenfalls aus der Bewegung des Fahrzeugs rekuperiert wird, wird eine zusätzliche Bremswirkung erreicht. Darüber hinaus ist selbst in dem Fall, dass die erste und die zweite Energieversorgungseinrichtung ausgefallen sind, immer noch eine Bremswirkung erzielbar.

In einer weiteren Ausführungsform ist wenigstens einem der Aktuatoren eine dritte Energieversorgungseinrichtung als Sekundärquelle zugeordnet.

Dadurch ist auch dann, wenn die erste und die zweite Energieversorgungseinrichtung beide ausgefallen sind, immer noch eine Bremswirkung erzielbar.

In einer weiteren Ausführungsform weist eine der Verbindungen zwischen einem der Aktuatoren und der ihm als sekundär zugeordneten Energieversorgungseinrichtung eine direkte elektrische Verbindung auf.

Dies ist die am einfachsten umsetzbare Verbindung mehrerer Energieversorgungseinrichtungen mit einem Aktuator.

In einer weiteren Ausführungsform weist eine der Verbindungen zwischen einem der Aktuatoren und der ihm als Sekundärquelle zugeordneten Energieversorgungseinrichtung eine Verbindung zwischen einem an der Primärquelle angeschlossenen ersten Verteilnetz und einem an der Sekundärquelle angeschlossenen zweiten Verteilnetz auf.

Eine über das Verteilnetz mögliche Verbindung zwischen den beiden Energieversorgungseinrichtungen erlaubt gegebenenfalls eine wenigstens teilweise Nutzung von Einrichtungen der jeweils anderen Energieversorgungseinrichtung. So können beispielsweise Versorgungsleitungen, Steuereinrichtungen, Leistungsbegrenzung o. ä. bei der Energieversorgung durch die jeweils andere Energieversorgungseinrichtung mitbenutzt werden.

In einer weiteren Ausführungsform weist eine der Verbindungen zwischen einem der Aktuatoren und der ihm als Sekundärquelle zugeordneten Energieversorgungseinrichtung eine Steuereinrichtung zur Steuerung und/oder Regelung eines Energieflusses zwischen der Sekundärquelle und dem Aktuator auf.

Dadurch ist es möglich, auf Leistungsgrenzen der als Sekundärquelle zugeordneten Energieversorgungseinrichtung Rücksicht zu nehmen. Wenn beispielsweise die erste und die zweite Energieversorgungseinrichtung jeweils nicht so ausgelegt sind, dass sie jeweils alle Aktuatoren vollständig mit Energie versorgen können, dann kann bei Ausfall einer der Energieversorgungseinrichtungen der verbleibenden Energieversorgungseinrichtung genauso viel Leistung für die von dem Ausfall betroffenen Aktuatoren abgeführt werden, dass die verbleibende Energieversorgungseinrichtung nicht überlastet wird.

In einer weiteren Ausführungsform sind die ersten Aktuatoren an einer Vorderachse des Fahrzeugs angeordnet, wobei den ersten Aktuatoren die erste Energieversorgungseinrichtung als Primärquelle zugeordnet ist und sind die zweiten Aktuatoren an einer Hinterachse des Fahrzeugs angeordnet, wobei den zweiten Aktuatoren die zweite Energieversorgungseinrichtung als Primärquelle zugeordnet ist.

Dadurch, dass die Aktuatoren jeder Achse in diesem Fall mit großer Wahrscheinlichkeit gleichzeitig ausfallen oder nur mit reduzierter Leistung betrieben werden können wird vermieden, dass durch eine asymmetrische Bremsleistung an einer Achse eine Drehbewegung des Fahrzeugs eingeleitet wird.

In einer weiteren Ausführungsform weist das Bremssystem eine Steuereinrichtung zur Steuerung einer Energieaufnahme der Bremseinrichtungen auf.

Derartige Steuereinrichtungen und Steuergeräte können beispielsweise die ausgeübte Bremskraft regeln oder eine Überlastung der Energieversorgungseinrichtungen vermeiden. Darüber hinaus kann beispielsweise eine Bremskraftwirkung bestimmter Aktuatoren, beispielsweise der Aktuatoren an der Vorderachse, mittels einer derartigen Steuereinrichtung priorisiert werden. Auch kann der Energiefluss aus einer Steuerleitung, beispielsweise einem CAN-Bus, durch eine derartige Steuereinrichtung begrenzt werden. Im Fall einer Begrenzung ist die maximale Bremskraft zwar reduziert, aber trotzdem ausreichend, um eine ausreichende Verzögerung des Fahrzeuges zu gewährleisten. Eine ausreichende Verzögerung kann beispielsweise durch eine gesetzliche Anforderung und/oder einen Standard definiert sein.

Die Aufgabe wird des Weiteren durch einen Aktuator gelöst, insbesondere eine elektromechanische Bremseinrichtung für ein elektromechanisches Bremssystem, der eine primäre Energieaufnahmeeinrichtung und eine sekundäre Energieaufnahmeeinrichtung, jeweils zur Verbindung mit einer Energieversorgungseinrichtung und eine steuerbare Auswahleinrichtung zur Auswahl einer der Energieversorgungseinrichtungen zur Speisung des Aktuators mit elektrischer Energie aufweist.

Dadurch wird die Betriebs- und Ausfallsicherheit des Aktuators verbessert.

In weiteren Ausführungsformen ist die Auswahleinrichtung dazu eingerichtet, bei einer Fehlfunktion der mit der primären Energieaufnahmeeinrichtung verbundenen Energieversorgungseinrichtung Energie aus der mit der sekundären Energieaufnahmeeinrichtung verbundenen Energieversorgungseinrichtung zur Verwendung durch den Aktuator auszuwählen.

Bei einem redundanten Aufbau mit mehreren Energieversorgungseinrichtungen kann der Aktuator somit automatisch von der ausgefallenen Energieversorgungseinrichtung auf eine noch funktionierende Energieversorgungseinrichtung umschalten und so die Ausfallsicherheit erhöhen.

Die Aufgabe wird darüber hinaus durch ein Fahrzeug gelöst, das eines der voranstehend genannten elektromechanischen Bremssysteme und/oder einen der voranstehend genannten Aktuatoren umfasst.

Ein derartiges Fahrzeug weist eine verbesserte Betriebs- und Ausfallsicherheit auf, da sein Bremssystem auch noch bei Ausfall einer Primärquelle eine Bremskraft ausüben kann.

Die Aufgabe wird darüber hinaus durch einen Anhänger gelöst, der eines der voranstehend genannten elektromechanischen Bremssysteme und/oder einen der voranstehend genannten Aktuatoren umfasst.

Ein derartiger Anhänger weist eine verbesserte Betriebs- und Ausfallsicherheit auf, da sein Bremssystem auch noch bei Ausfall einer Primärquelle eine Bremskraft ausüben kann.

Die Aufgabe wird darüber hinaus durch eine Nutzfahrzeugankombination gelöst, die eines der voranstehend genannten Fahrzeuge und einen der voranstehend genannten Anhänger umfasst.

Eine derartige Nutzfahrzeugkombination weist eine verbesserte Betriebs- und Ausfallsicherheit auf, da ihr Bremssystem auch noch bei Ausfall einer Primärquelle eine Bremskraft ausüben kann.

Im Folgenden wird die Erfindung anhand von Ausführungsbeispielen näher erläutert, die in den beigefügten Figuren lediglich schematisch dargestellt sind. Es zeigen im Einzelnen:
- Fig. 1: eine schematische Darstellung eines Bremssystems gemäß einer Ausführungsform der Erfindung;
- Fig. 2: eine schematische Darstellung eines Bremssystems gemäß einer Ausführungsform der Erfindung;
- Fig. 3: eine schematische Darstellung eines Bremssystems gemäß einer Ausführungsform der Erfindung und
- Fig. 4: eine schematische Darstellung eines Bremssystems gemäß einer Ausführungsform der Erfindung.

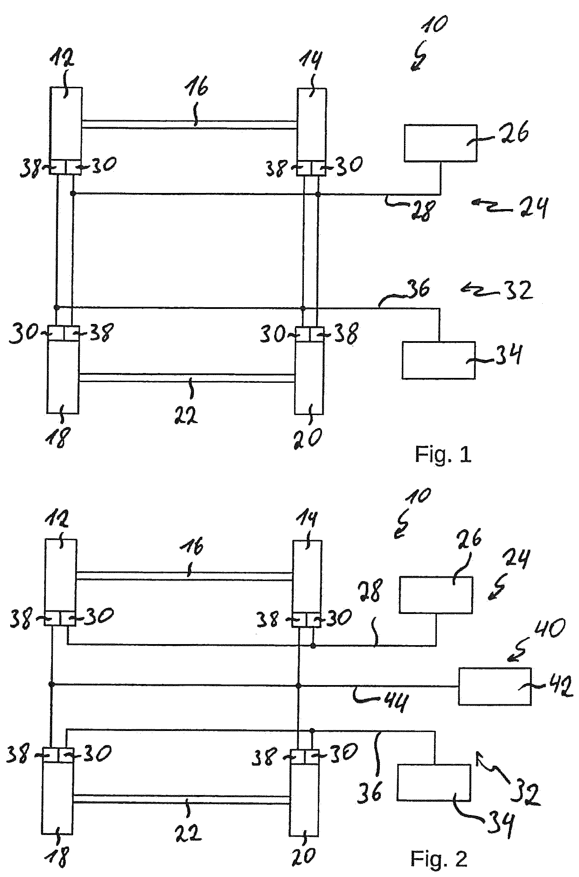

Ein in **Fig. 1** gezeigtes elektromechanisches Bremssystem 10 für ein Fahrzeug weist zwei erste Aktuatoren, beispielsweise erste elektromechanische Bremseinrichtungen 12, 14, auf, die an einer ersten Achse 16 des Fahrzeugs angeordnet sind. Darüber hinaus weist das Bremssystem 10 zwei zweite Aktuatoren, hier elektromechanische Bremseinrichtungen 18, 20 auf, die an einer zweiten Achse 22 des Fahrzeugs angeordnet sind.

Die erste Achse 16 kann beispielsweise eine Vorderachse des Fahrzeugs sein. Die zweite Achse 22 kann beispielsweise eine Hinterachse des Fahrzeugs sein.

Zur Versorgung der ersten Bremseinrichtungen 12, 14 mit elektrischer Energie ist eine erste Energieversorgungseinrichtung 24 vorgesehen, die eine erste Energiespeichereinrichtung 26 aufweist. Ein erstes Verteilnetz 28 ist zur elektrischen Verbindung beliebiger Einrichtungen des Fahrzeugs miteinander vorgesehen und verbindet die daran angeschlossene erste Energieversorgungseinrichtung 24 mit den ersten Bremseinrichtungen 12, 14. Die ersten Bremseinrichtungen 12, 14 weisen zum Anschluss an das erste Verteilnetz 28 jeweils einen Primäreingang 30 auf. Über den Primäreingang 30 wird im gewöhnlichen Betrieb die zum Betrieb der ersten Bremseinrichtungen 12, 14 notwendige Energie von einer diesen zugeordneten Primärquelle, die hier durch die erste Energieversorgungseinrichtung 24 gebildet ist, aufgenommen.

Zur Versorgung der zweiten Bremseinrichtungen 18, 20 mit elektrischer Energie ist eine zweite Energieversorgungseinrichtung 32 vorgesehen, die eine zweite Energiespeichereinrichtung 34 aufweist. Analog zu dem ersten Verteilnetz 28 verbindet ein zweites Verteilnetz 36 die zweite Energieversorgungseinrichtung 32 mit Primäreingängen 30 der zweiten Bremseinrichtungen 18, 20. Die zweite Energieversorgungseinrichtung 32 ist den zweiten Bremseinrichtungen 18, 20 also als Primärquelle zugeordnet.

Die Bremseinrichtungen 12, 14, 18, 20 weisen jeweils einen Sekundäreingang 38 zur Verbindung mit einer den Bremseinrichtungen 12, 14, 18, 20 jeweils als Sekundärquelle zugeordneten Energieversorgungseinrichtung 24, 32 auf.

Da lediglich zwei Energieversorgungseinrichtungen 24, 32 vorhanden sind, ist den Bremseinrichtungen 12, 14, 18, 20 jeweils eine der Energieversorgungseinrichtungen 24, 32 als Primärquelle und die jeweils andere Energieversorgungseinrichtung 24, 32 als Sekundärquelle zugeordnet. In der vorliegenden Ausführungsform ist den ersten Bremseinrichtungen 12, 14 die erste Energieversorgungseinrichtung 24 als Primärquelle und die zweite Energieversorgungseinrichtung 32 als Sekundärquelle zugeordnet. Den zweiten Bremseinrichtungen 18, 20 ist die zweite Energieversorgungseinrichtung 32 als Primärquelle und die erste Energieversorgungseinrichtung 24 als Sekundärquelle zugeordnet.

Die Sekundäreingänge 38 sind also jeweils an das Verteilnetz 28, 36 angeschlossen, an das die als Sekundärquelle zugeordnete Energieversorgungseinrichtung 24, 32 angeschlossen ist.

Im Normalbetrieb ist vorgesehen, dass die ersten Bremseinrichtungen 12, 14 die zu ihrem Betrieb notwendige Energie aus ihrer Primärquelle, also aus der ersten Energieversorgungseinrichtung 24 erhalten. Ebenso erhalten die zweiten Bremseinrichtungen 18, 20 die zu ihrem Betrieb notwendige Energie aus der ihnen zugeordneten Primärquelle, also aus der zweiten Energieversorgungseinrichtung 32. Dies dient dazu, eine Redundanz zwischen den Bremseinrichtungen 12, 14, 18, 20 bereitzustellen. Falls beispielsweise die zweite Energieversorgungseinrichtung 32 ausfällt, und somit die zweiten Bremseinrichtungen 18, 20 nicht mehr funktionsfähig sind, dann kann das Fahrzeug immer noch mittels der ersten Bremseinrichtungen 12, 14, die ihre Energie von der noch funktionierenden ersten Energieversorgungseinrichtung 24 beziehen, abgebremst werden. Das Fahrzeug bleibt also auch bei Ausfall oder Fehlfunktion von nur einer der Energieversorgungseinrichtungen 24, 32 weiterhin kontrollierbar.

Um bei Ausfall einer der Energieversorgungseinrichtungen 24, 32 eine mögliche Bremswirkung zu erhöhen, können die Bremseinrichtungen 12, 14, 18, 20 bei Ausfall ihrer Primärquelle Energie aus der ihr zugeordneten Sekundärquelle für ihren Betrieb verwenden. Zu diesem Zwecke weisen die Bremseinrichtungen 12, 14, 18, 20 jeweils eine Steuereinrichtung auf, die zum Erkennen eines Ausfalls und/oder einer Fehlfunktion der als Primärquelle zugeordneten Energieversorgungseinrichtung 24, 32 und bei Erkennen eines Ausfalls und/oder einer Fehlfunktion der als Primärquelle zugeordneten Energieversorgungseinrichtung 24, 32 zum Umschalten der verwendeten Energieversorgungseinrichtung von der Primärquelle auf die als Sekundärquelle zugeordnete Energieversorgungseinrichtung 24, 32 eingerichtet ist. Dadurch kann, zusätzlich zu der Bremswirkung der Bremseinrichtungen 12, 14, 18, 20, deren Primärquelle keine Fehlfunktion und/oder Störung aufweist, eine Bremswirkung der weiteren Bremseinrichtungen 12, 14, 18, 20 bereitgestellt werden.

In einer weiteren Ausführungsform kann die Steuereinrichtung dazu eingerichtet sein, eine der Sekundärquelle entnommene Leistung zu begrenzen. Dies ist insbesondere dann von Vorteil, wenn die von den Energieversorgungseinrichtungen 24, 32 bereitstellbare Leistung nicht zum Betrieb aller Bremseinrichtungen 12, 14, 18, 20 gleichzeitig ausreicht. Durch die Leistungsbegrenzung wird die maximale, mit einer Energieversorgungseinrichtung 24, 32 erreichbare, Bremswirkung erzielt.

In weiteren Ausführungsformen, in denen weitere Energieversorgungseinrichtungen vorhanden sind, kann auch beispielsweise eine der weiteren Energieversorgungseinrichtungen als Sekundärquelle zugeordnet sein.

Ein Beispiel für eine derartige Ausführungsform ist in **Fig.** 2 gezeigt. Die erste Energieversorgungseinrichtung 24 weist lediglich Verbindungen zu den Primäreingängen 30 der ersten Bremseinrichtungen 12,14 auf. Die zweite Energieversorgungseinrichtung 32 weist lediglich Verbindungen zu den Primäreingängen 30 der zweiten Bremseinrichtungen 18,20 auf.

Eine dritte Energieversorgungseinrichtung 40 weist eine dritte Energiespeichereinrichtung 42 und ein drittes Verteilnetz 44 auf. Die dritte Energieversorgungseinrichtung 40 ist mit den Sekundäreingängen 38 der Bremseinrichtungen 12, 14, 18, 20 verbunden. Darüber hinaus ist die dritte Energieversorgungseinrichtung 40 den Bremseinrichtungen 12, 14, 18, 20 als Sekundärquelle zugeordnet. Sofern eine der Energieversorgungseinrichtungen 24, 32 eine Fehlfunktion aufweist oder ausfällt ist die von der dritten Energieversorgungseinrichtung 40 bereitgestellte Energie zur Durchführung von Bremsvorgängen verfügbar.

Diese von der dritten Energieversorgungseinrichtung 40 bereitgestellte Energie kann beispielsweise in ihrer verfügbaren Leistung begrenzt sein. Auch diese begrenzte Leistung kann aber beispielsweise zum Erzeugen einer Bremswirkung genutzt werden, die, beispielsweise auch in Kombination mit den funktionierenden Bremseinrichtungen 12, 14, 18, 20, beispielsweise zur Erfüllung entsprechender Sicherheitsnormen ausreichend ist.

In weiteren Ausführungsformen weist die dritte Energieversorgungseinrichtung 40 beispielsweise eine Steuereinrichtung zum Steuern der Bremswirkung der Bremseinrichtungen 12, 14, 18, 20 auf. Darüber hinaus weist das dritte Verteilnetz 44 beispielsweise Signalleitungen zum Übermitteln von Steuersignalen von der Steuereinrichtung zu den Bremseinrichtungen 12, 14, 18, 20 auf, beispielsweise einen CAN-Bus. Die über das dritte Verteilnetz 44 verfügbare Leistung kann begrenzt sein. Daher ist der Sekundäreingang 38 beispielsweise zur Aufnahme einer Leistung eingerichtet, die kleiner ist als die Leistung, zu deren Aufnahme der Primäreingang 30 eingerichtet ist. Beispielsweise weist der Sekundäreingang 38 eine Leistungsbegrenzungseinrichtung auf, um das dritte Verteilnetz 44 nicht zu überlasten. Dies kann insbesondere wichtig sein, wenn zum Anschluss des dritten Verteilnetzes 44 verwendete Leitungen und Stecker für die jeweils transportierbare Leistung dimensioniert sind und bei zu hoher transportierter Leistung beschädigt oder zerstört werden könnten.

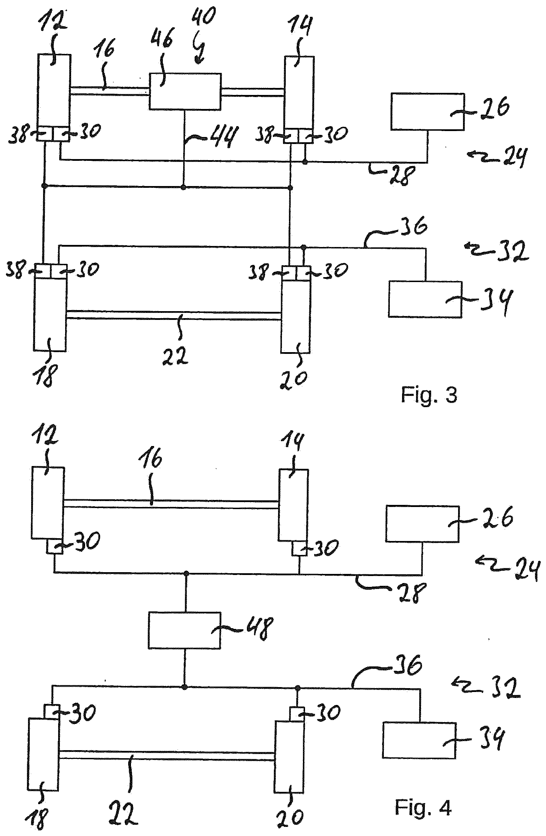

Die dritte Energieversorgungseinrichtung 40 kann in einer weiteren Ausführungsform, wie in **Fig.** 3 gezeigt, statt einer Energiespeichereinrichtung 42 eine Rekuperationseinrichtung 46 aufweisen. Die Rekuperationseinrichtung 46 ist dazu geeignet, aus einer Drehbewegung einer Achse 16, 22 elektrische Energie zu erzeugen, die mittels des dritten Verteilnetzes 44 an die Sekundäreingänge 38 weitergegeben wird. Dadurch ergibt sich bei Ausfall der ersten oder zweiten Energieversorgungseinrichtung 24, 32 zusätzlich eine Bremswirkung durch die Rekuperation.

In weiteren Ausführungsformen, von denen eine beispielhaft in **Fig.** 4 gezeigt ist, weisen die Bremseinrichtungen 12, 14, 18, 20 keine Sekundäreingänge 38 auf. Stattdessen ist eine steuerbare Energieleiteinrichtung 48 vorgesehen, die an die Verteilnetze 28, 36 angeschlossen ist. Die Energieleiteinrichtung 48 ist zur Erkennung einer Fehlfunktion und/oder eines Ausfalls der Energieversorgung über eines der Verteilnetze 28, 36 ausgebildet und eingerichtet. Des Weiteren ist die Energieleiteinrichtung 48 dazu ausgebildet und eingerichtet, beispielsweise im Fall einer Fehlfunktion der an einem der Verteilnetze 28, 36 angeschlossenen Energieversorgungseinrichtungen 24, 32 Energie von dem jeweils anderen Verteilnetz 28, 36 in das Verteilnetz 28, 36 mit der fehlerhaft funktionierenden Energieversorgungseinrichtung 24, 32 einzuleiten.

In weiteren Ausführungsformen ist die Energieleiteinrichtung 48 dazu ausgebildet und eingerichtet, die in das Verteilnetz 28, 36, an dem die fehlerhaft funktionierende Energieversorgungseinrichtung 24, 32 angeschlossen ist, eingeleitete Leistung zu begrenzen.

In weiteren Ausführungsformen ist die dritte Energieversorgungseinrichtung 40 mittels des dritten Verteilnetzes 44 mit der Energieleiteinrichtung 48 verbunden, so dass diese im Fall einer Fehlfunktion einer der Energieversorgungseinrichtungen 24, 32 Energie von der dritten Energieversorgungseinrichtung 40 in das Verteilnetz 28, 36 mit der fehlerhaft funktionierenden Energieversorgungseinrichtung 24, 36 einleiten kann. Die dritte Energieversorgungseinrichtung 40 ist also beispielsweise allen Bremseinrichtungen 12, 14, 18, 20 als Sekundärquelle zugeordnet.

In weiteren Ausführungsformen ist als dritte Energieversorgungseinrichtung 40 beispielsweise ein anderes Element im Fahrzeug, insbesondere des elektromechanischen Bremssystems, beispielsweise ein Fußbremsmodul, E-Kompressor oder ein anderes Element aus einem anderen Bordnetz bzw. dessen Energieversorgung, insbesondere des 24 V-Bordnetzes, vorgesehen.

In weiteren Ausführungsformen ist lediglich einem Teil der Bremseinrichtungen 12, 14, 18, 20 eine Sekundärquelle zugeordnet. Beispielsweise können die Bremseinrichtungen 12, 14, die an einer Vorderachse 16 des Fahrzeugs angeordnet sind, mit einer zugeordneten Sekundärquelle versehen sein und die Bremseinrichtungen 18, 20, die an einer Hinterachse 22 des Fahrzeugs angeordnet sind, keine Sekundärquelle zur Verfügung haben. Die Funktion der Bremsen der Vorderachse 16 ist im Falle einer Fehlfunktion einer Energieversorgungseinrichtung 24, 32 besonders wichtig, da die Vorderachse 16 während einer Bremsung eine Achslasterhöhung erfährt.

In weiteren Ausführungsformen sind alle an einer Achse 16, 22 gemeinsam angeordneten Bremseinrichtungen 12, 14, 18, 20 entweder mit oder ohne Sekundärquelle ausgestaltet. Beispielsweise sind also die an der Vorderachse 16 angeordneten ersten Bremseinrichtungen 12, 14 entweder beide mit oder beide ohne Sekundärquelle ausgestaltet, wobei diesen als Sekundärquelle beispielsweise die zweite Energieversorgungseinrichtung 32 zugeordnet sein kann. Dies ist insbesondere zur Vermeidung eines Giermoments aufgrund eines ungleichmäßigen Bremsvorgangs vorteilhaft.

In weiteren Ausführungsformen sind statt der Bremseinrichtungen 12, 14, 18, 20 beispielsweise andere Aktuatoren vorgesehen.

In weiteren Ausführungsformen ist die Energieleiteinrichtung 48 durch ein Steuergerät, beispielsweise ein Steuergerät eines EMBS-Systems, gebildet.

In weiteren Ausführungsformen weisen die Sekundäreingänge 38 beispielsweise eine Steuereinrichtung zur Steuerung einer Energieaufnahme der Bremseinrichtung 12, 14, 18, 20 auf, die eine Überlastung der Sekundärquelle vermeidet. In weiteren Ausführungsformen weist die Bremseinrichtung 12, 14, 18, 20 beispielsweise eine steuerbare Auswahleinrichtung zur Auswahl einer der mit ihr verbundenen Energieversorgungseinrichtungen 24, 32, 40 auf. Eine derartige steuerbare Auswahleinrichtung kann beispielsweise dazu eingerichtet sein, bei einer Fehlfunktion der mit einer primären Energieaufnahmeeinrichtung, also beispielsweise dem Primäreingang 30, verbundenen Energieversorgungseinrichtung 24, 32, 40 Energie aus der mit einer sekundären Energieaufnahmeeinrichtung, also beispielsweise mit dem Sekundäreingang 38, verbundenen Energieversorgungseinrichtung 24, 32, 40 zur Verwendung in der Bremseinrichtung auszuwählen.

Die Energieversorgungseinrichtungen 24, 32, 40 sind hier nur schematisch dargestellt. Bei Verwendung einer Energiespeichereinrichtung 26, 34, 42 die beispielsweise als Batterie, insbesondere als Lithium-Ionen-Batterie, ausgestaltet ist, können die Energieversorgungseinrichtungen 24, 32, 40 weitere Einrichtungen, beispielsweise eine Lade- und/oder Entladestromregelung, eine Temperaturüberwachungseinrichtung aufweisen. Jede der Energieversorgungseinrichtungen 24, 32, 40 kann, unabhängig von ihrer Zuordnung als Primär- oder Sekundärquelle, auch auf beliebige geeignete andere Weise ausgestaltet sein, beispielsweise als Batterie oder Brennstoffzelle.

Insbesondere Nutzfahrzeuge können in weiteren Ausführungsformen mehrere Vorder- und/oder Hinterachsen 16, 22 aufweisen, beispielsweise in einer 6x2- oder 6x4-Andordnung. In diesen Fällen können Bremseinrichtungen 12, 14, 18, 20 an mehreren Vorderachsen 16 und/oder an mehreren Hinterachsen 22 angeordnet sein.

Eine Fehlfunktion des jeweiligen Verteilnetzes 28, 36, 44 ist einer Fehlfunktion der angeschlossenen Energieversorgungseinrichtung 24, 32, 40 aus Sicht der Bremseinrichtung 12, 14, 18, 20 gleichwertig. Eine derartige Fehlfunktion eines Verteilnetzes 28, 36, 44 ist auch aus Sicht der Bremseinrichtung oft nicht von einer Fehlfunktion der Energieversorgungseinrichtung 24, 32, 40 nicht zu unterscheiden. Eine derartige Unterscheidung ist für die Funktion nicht relevant, da das wesentliche Anzeichen einer Fehlfunktion im Sinne dieser Erfindung darin besteht, dass keine ausreichende Energie zum Betrieb der Bremseinrichtung 12, 14, 18, 20 an dieser zur Verfügung steht. Unter einer Fehlfunktion der Energieversorgungseinrichtung 24, 32, 40 ist also jede Fehlfunktion zu verstehen, die zu einer nicht ausreichenden Energieversorgung einer der Bremseinrichtungen 12, 14, 18, 20 führt.

Die Bezeichnung erste Bremseinrichtung 12, 14 ist so zu verstehen, dass die so bezeichneten Bremseinrichtungen 12, 14 einer ersten Gruppe von Bremseinrichtungen zugeordnet sind. Ebenso ist die Bezeichnung zweite Bremseinrichtungen 18, 20 so zu verstehen, dass die so bezeichneten Bremseinrichtungen 18, 20 einer zweiten Gruppe von Bremseinrichtungen zugeordnet sind. In weiteren Ausführungsformen können jeder der Gruppen beispielsweise weniger als zwei oder mehr als zwei Bremseinrichtungen 12, 14, 18, 20 zugeordnet sein. In weiteren Ausführungsformen können die Bremseinrichtungen 12, 14, 18, 20 beispielsweise jeweils identisch oder unterschiedlich aufgebaut und/oder ausgelegt sein.

### BEZUGSZEICHENLISTE

- 10: (elektromechanisches) Bremssystem
- 12: erste (elektromechanische) Bremseinrichtung/erster Aktuator
- 14: erste (elektromechanische) Bremseinrichtung/erster Aktuator
- 16: erste Achse (Vorderachse)
- 18: zweite (elektromechanische) Bremseinrichtung/zweiter Aktuator
- 20: zweite (elektromechanische) Bremseinrichtung/zweiter Aktuator
- 22: zweite Achse (Hinterachse)
- 24: erste Energieversorgungseinrichtung
- 26: erste Energiespeichereinrichtung
- 28: erstes Verteilnetz
- 30: Primäreingang
- 32: zweite Energieversorgungseinrichtung
- 34: zweite Energiespeichereinrichtung
- 36: zweites Verteilnetz
- 38: Sekundäreingang
- 40: dritte Energieversorgungseinrichtung
- 42: dritte Energiespeichereinrichtung
- 44: drittes Verteilnetz
- 46: Rekuperationseinrichtung
- 48: Energieleiteinrichtung (Steuereinrichtung)

## Patentansprüche

1. Elektromechanisches Bremssystem (10) für ein Fahrzeug, aufweisend wenigstens einen ersten Aktuator (12, 14), wenigstens eine erste Energieversorgungseinrichtung (24) und eine zweite Energieversorgungseinrichtung (32), wobei dem ersten Aktuator (12, 14) eine der Energieversorgungseinrichtungen (24, 32) als Primärquelle zur Versorgung mit elektrischer Energie zugeordnet ist und der erste Aktuator (12, 14) eine Verbindung zu dieser als Primärquelle zugeordneten Energieversorgungseinrichtung (24, 32) aufweist, wobeider erste Aktuator (12, 14) zusätzlich eine Verbindung zu einer ihm als Sekundärquelle zugeordneten Energieversorgungseinrichtung (24, 32, 40) zur Versorgung des ersten Aktuators (12, 14) mit elektrischer Energie zugeordneten Energieversorgungseinrichtung (24, 32, 40) aufweist, wobei das elektromechanische Bremssystem (10) wenigstens einen zweiten Aktuator (18, 20) aufweist, dem eine der Energieversorgungseinrichtungen (24, 32) als Primärquelle zur Versorgung mit elektrischer Energie zugeordnet ist, wobei der zweite Aktuator (18, 20) eine Verbindung zu dieser als Primärquelle zugeordneten Energieversorgungseinrichtung (24, 32) aufweist, und wobei der zweite Aktuator (18, 20) zusätzlich eine Verbindung zu einer ihm als Sekundärquelle zugeordneten Energieversorgungseinrichtung (24, 32, 40) zur Versorgung des Aktuators (12, 14) mit elektrischer Energie zugeordneten Energieversorgungseinrichtung (24, 32, 40) aufweist, **dadurch gekennzeichnet, dass** eine der Verbindungen zwischen einem der Aktuatoren (12, 14, 18, 20) und der ihm als Sekundärquelle zugeordneten Energieversorgungseinrichtung (24, 32, 40) eine Verbindung zwischen einem an der Primärquelle angeschlossenen Verteilnetz (28) und einem an der Sekundärquelle angeschlossenen zweiten Verteilnetz (36) aufweist, wobei die Verbindung eine steuerbare Energieleiteinrichtung (48) aufweist, die an die Verteilnetze (28, 36) angeschlossen und zur Erkennung einer Fehlfunktion und/oder eines Ausfalls der Energieversorgung über eines der Verteilnetze (28, 36), sowie dazu, Energie von dem jeweils anderen Verteilnetz (28, 36) in das Verteilnetz (28, 36) mit der fehlerhaft funktionierenden Energieversorgungseinrichtung (24, 32) einzuleiten, ausgebildet und eingerichtet ist.

2. Elektromechanisches Bremssystem gemäß Anspruch 1, **dadurch gekennzeichnet, dass** wenigstens einem der Aktuatoren (12, 14, 18, 20) jeweils eine der Energieversorgungseinrichtungen (24, 32, 40), die ihm nicht als Primärquelle zugeordnet ist, als Sekundärquelle zugeordnet ist.

3. Elektromechanisches Bremssystem gemäß einem der voranstehenden Ansprüche, **dadurch gekennzeichnet, dass** wenigstens einer der Aktuatoren (12, 14, 18, 20) eine primäre Energieaufnahmeeinrichtung (30) und eine sekundäre Energieaufnahmeeinrichtung (38), jeweils zur Verbindung mit einer Energieversorgungseinrichtung (24, 32, 40), aufweist.

4. Elektromechanisches Bremssystem gemäß Anspruch 3, **dadurch gekennzeichnet, dass** wenigstens eine der Energieaufnahmeeinrichtungen (30, 38) einen Signaleingang zur Aufnahme eines Steuersignals zur Steuerung des Aktuators (12, 14, 18, 20) aufweist.

5. Elektromechanisches Bremssystem gemäß Anspruch 4, **dadurch gekennzeichnet, dass** die den Signaleingang aufweisende Energieaufnahmeeinrichtung (30, 38) zur Aufnahme einer Leistung eingerichtet ist, die kleiner ist als die Leistung, zu deren Aufnahme die jeweils andere Energieaufnahmeeinrichtung (30, 38) eingerichtet ist.

6. Elektromechanisches Bremssystem gemäß einem der voranstehenden Ansprüche, **dadurch gekennzeichnet, dass** wenigstens einem der Aktuatoren (12, 14, 18, 20) eine Rekuperationseinrichtung (46) als Sekundärquelle zugeordnet ist.

7. Elektromechanisches Bremssystem gemäß einem der voranstehenden Ansprüche, **dadurch gekennzeichnet, dass** wenigstens einem der Aktuatoren (12, 14, 18, 20) eine dritte Energieversorgungseinrichtung (40) als Sekundärquelle zugeordnet ist.

8. Elektromechanisches Bremssystem gemäß einem der voranstehenden Ansprüche, **dadurch gekennzeichnet, dass** eine der Verbindungen zwischen einem der Aktuatoren (12, 14, 18, 20) und der ihm als Sekundärquelle zugeordneten Energieversorgungseinrichtung (24, 32, 40) eine direkte elektrische Verbindung aufweist.

9. Elektromechanisches Bremssystem gemäß einem der voranstehenden Ansprüche, **dadurch gekennzeichnet, dass** eine der Verbindungen zwischen einem der Aktuatoren (12, 14, 18, 20) und der ihm als Sekundärquelle zugeordneten Energieversorgungseinrichtung (24, 32, 40) eine Steuereinrichtung (48) zur Steuerung und/oder Regelung eines Energieflusses zwischen der Sekundärquelle und dem Aktuator (12, 14, 18, 20) aufweist.

10. Elektromechanisches Bremssystem gemäß einem der voranstehenden Ansprüche, **dadurch gekennzeichnet, dass** die ersten Aktuatoren (12, 14) an wenigstens einer Vorderachse (16) des Fahrzeugs angeordnet sind, wobei den ersten Aktuatoren (12, 14) die erste Energieversorgungseinrichtung (24) als Primärquelle zugeordnet ist, und dass die zweiten Aktuatoren (18, 20) an wenigstens einer Hinterachse (22) des Fahrzeugs angeordnet sind, wobei den zweiten Aktuatoren (18, 20) die zweite Energieversorgungseinrichtung (32) als Primärquelle zugeordnet ist.

11. Elektromechanisches Bremssystem gemäß einem der voranstehenden Ansprüche, **gekennzeichnet durch** eine Steuereinrichtung zur Steuerung einer Energieaufnahme der Bremseinrichtungen und/oder zur Steuerung einer Bremskraft der Bremseinrichtungen.

12. Aktuator (12, 14, 18, 20), insbesondere elektromechanische Bremseinrichtung für ein Elektromechanisches Bremssystem, aufweisend eine primäre Energieaufnahmeeinrichtung (30), eine sekundäre Energieaufnahmeeinrichtung (38), jeweils zum Verbinden mit einer Energieversorgungseinrichtung (24, 32, 40), und eine steuerbare Auswahleinrichtung zur Auswahl einer der Energieversorgungseinrichtungen (24, 32, 40) zur Speisung des Aktuators (12, 14, 18, 20) mit elektrischer Energie.

13. Aktuator gemäß Anspruch 12, **dadurch gekennzeichnet, dass** die Auswahleinrichtung dazu eingerichtet ist, bei einer Fehlfunktion der mit der primären Energieaufnahmeeinrichtung (30) verbundenen Energieversorgungseinrichtung (24, 32, 40) Energie aus der mit der sekundären Energieaufnahmeeinrichtung (38) verbundenen Energieversorgungseinrichtung (24, 32, 40) zur Verwendung durch den Aktuator (12, 14, 18, 20) auszuwählen.

14. Fahrzeug, insbesondere Nutzfahrzeug, wobei das Fahrzeug ein elektromechanisches Bremssystem gemäß einem der Ansprüche 1 bis 11 oder einen Aktuator gemäß Anspruch 12 oder 13 aufweist.

15. Fahrzeug gemäß Anspruch 14, **dadurch gekennzeichnet, dass** das Fahrzeug einen elektrischen Antrieb aufweist.

16. Fahrzeug gemäß Anspruch 15, **dadurch gekennzeichnet, dass** das Fahrzeug eine Traktionsbatterie und/oder eine Brennstoffzelle aufweist.

17. Anhänger für ein Nutzfahrzeug, wobei der Anhänger ein elektromechanisches Bremssystem gemäß einem der Ansprüche 1 bis 11 oder einen Aktuator gemäß Anspruch 12 oder 13 aufweist.

18. Nutzfahrzeugkombination, **dadurch gekennzeichnet, dass** die Nutzfahrzeugkombination ein Fahrzeug gemäß einem der Ansprüche 14 bis 16 und wenigstens einen Anhänger gemäß Anspruch 17 aufweist.

## Claims

1. An electromechanical braking system (10) for a vehicle, having at least one first actuator (12, 14), at least one first energy supply device (24) and one second energy supply device (32), wherein one of the energy supply devices (24, 32) is assigned to the first actuator (12, 14) as a primary source for supplying electrical energy and the first actuator (12, 14) has a connection to this energy supply device (24, 32) assigned as the primary source, wherein the first actuator (12, 14) additionally has a connection to an energy supply device (24, 32, 40) assigned to it as a secondary source for supplying the first actuator (12, 14) with electrical energy (24, 32, 40), wherein the electromechanical braking system (10) has at least one second actuator (18, 20) to which one of the energy supply devices (24, 32) is assigned as the primary source for supplying electrical energy, wherein the second actuator (18, 20) has a connection to this energy supply device (24, 32) assigned as the primary source, and wherein the second actuator (18, 20) additionally has a connection to an energy supply device (24, 32, 40) assigned to it as a secondary source for supplying the actuator (12, 14) with electrical energy, **characterized in that** one of the connections between one of the actuators (12, 14, 18, 20) and the energy supply device (24, 32, 40) assigned to it as the secondary source has a connection between a distribution network (28) connected to the primary source and a second distribution network (36) connected to the secondary source, wherein the connection has a controllable energy management device (48) which is connected to the distribution networks (28, 36) and is designed and configured to detect a malfunction and/or a failure of the energy supply via one of the distribution networks (28, 36) and to introduce energy from the respective other distribution network (28, 36) into the distribution network (28, 36) with the malfunctioning energy supply device (24, 32).

2. The electromechanical braking system as claimed in claim 1, **characterized in that** at least one of the actuators (12, 14, 18, 20) is assigned one of the energy supply devices (24, 32, 40) as a secondary source that is not assigned to it as a primary source.

3. The electromechanical braking system as claimed in any one of the preceding claims, **characterized in that** at least one of the actuators (12, 14, 18, 20) has a primary energy absorption device (30) and a secondary energy absorption device (38), each for connection to an energy supply device (24, 32, 40).

4. The electromechanical braking system as claimed in claim 3, **characterized in that** at least one of the energy absorption devices (30, 38) has a signal input for receiving a control signal for controlling the actuator (12, 14, 18, 20).

5. The electromechanical braking system as claimed in claim 4, **characterized in that** the energy absorption device (30, 38) having the signal input is set up to receive power that is less than the power that the other energy absorption device (30, 38) is set up to receive.

6. The electromechanical braking system as claimed in any one of the preceding claims, **characterized in that** at least one of the actuators (12, 14, 18, 20) is assigned a recuperation device (46) as a secondary source.

7. The electromechanical braking system as claimed in any one of the preceding claims, **characterized in that** at least one of the actuators (12, 14, 18, 20) is assigned a third energy supply device (40) as a secondary source.

8. The electromechanical braking system as claimed in any one of the preceding claims, **characterized in that** one of the connections between one of the actuators (12, 14, 18, 20) and the energy supply device (24, 32, 40) assigned to it as a secondary source has a direct electrical connection.

9. The electromechanical braking system as claimed in any one of the preceding claims, **characterized in that** one of the connections between one of the actuators (12, 14, 18, 20) and the energy supply device (24, 32, 40) assigned to it as a secondary source has a control device (48) for controlling and/or regulating an energy flow between the secondary source and the actuator (12, 14, 18, 20).

10. The electromechanical braking system as claimed in any one of the preceding claims, **characterized in that** the first actuators (12, 14) are arranged on at least one front axle (16) of the vehicle, wherein the first actuators (12, 14) are assigned the first energy supply device (24) as the primary source, and **in that** the second actuators (18, 20) are arranged on at least one rear axle (22) of the vehicle, wherein the second actuators (18, 20) are assigned the second energy supply device (32) as the primary source.

11. The electromechanical braking system as claimed in any one of the preceding claims, **characterized by** a control device for controlling the energy absorption of the braking devices and/or for controlling a braking force of the braking devices.

12. An actuator (12, 14, 18, 20), in particular an electromechanical braking device for an electromechanical braking system, having a primary energy absorption device (30), a secondary energy absorption device (38), each for connection to an energy supply device (24, 32, 40), and a controllable selection device for selecting one of the energy supply devices (24, 32, 40) for supplying the actuator (12, 14, 18, 20) with electrical energy.

13. The actuator as claimed in claim 12, **characterized in that** the selection device is set up, in the event of a malfunction of the energy supply device (24, 32, 40) connected to the primary energy absorption device (30), to select energy from the energy supply device (24, 32, 40) connected to the secondary energy absorption device (38) for use by the actuator (12, 14, 18, 20).

14. A vehicle, in particular a utility vehicle, wherein the vehicle has an electromechanical braking system as claimed in any one of claims 1 to 11 and/or an actuator as claimed in claim 12 or 13.

15. The vehicle as claimed in claim 14, **characterized in that** the vehicle has an electric drive.

16. The vehicle as claimed in claim 15, **characterized in that** the vehicle has a traction battery and/or a fuel cell.

17. A trailer for a utility vehicle, wherein the trailer has an electromechanical braking system as claimed in any one of claims 1 to 11 and/or an actuator as claimed in claim 12 or 13.

18. A utility vehicle combination, **characterized in that** the utility vehicle combination has a vehicle as claimed in any one of claims 14 to 16 and at least one trailer as claimed in claim 17.

## Revendications

1. Système de freinage électromécanique (10) pour un véhicule, présentant au moins un premier actionneur (12, 14), au moins un premier appareil d'alimentation en énergie (24) et un deuxième appareil d'alimentation en énergie (32), dans lequel l'un des appareils d'alimentation en énergie (24, 32) est associé au premier actionneur (12, 14) en tant que source primaire pour l'alimentation en énergie électrique, et le premier actionneur (12, 14) présente une connexion avec cet appareil d'alimentation en énergie (24, 32) associé en tant que source primaire, dans lequel le premier actionneur (12, 14) présente en outre une connexion avec un appareil d'alimentation en énergie (24, 32, 40) qui lui est associé en tant que source secondaire pour l'alimentation du premier actionneur (12, 14) en énergie électrique, dans lequel le système de freinage (10) électromécanique présente au moins un second actionneur (18, 20) auquel est associé l'un des appareils d'alimentation en énergie en tant que source primaire pour l'alimentation en énergie électrique, dans lequel le second actionneur (18, 20) présente une connexion avec cet appareil d'alimentation en énergie (24, 32) associé en tant que source primaire, et dans lequel le second actionneur (18, 20) présente en outre une connexion avec un appareil d'alimentation en énergie (24, 32, 40) qui lui est associé en tant que source secondaire pour l'alimentation de l'actionneur (12, 14) en énergie électrique, **caractérisé en ce que** l'une des connexions entre l'un des actionneurs (12, 14, 18, 20) et l'appareil d'alimentation en énergie (24, 32, 40) qui lui est associé en tant que source secondaire présente une connexion entre un réseau de distribution (28) raccordé à la source primaire et un second réseau de distribution (36) raccordé à la source secondaire, dans lequel la connexion présente un appareil de transport d'énergie (48) pouvant être commandé qui est raccordé aux réseaux de distribution (28, 36) et réalisé et conçu pour la détection d'un dysfonctionnement et/ou d'une panne de l'alimentation en énergie sur l'un des réseaux de distribution (28, 36) ainsi que pour introduire de l'énergie depuis l'autre réseau de distribution (28, 36) respectivement dans le réseau de distribution (28, 36) avec l'appareil d'alimentation en énergie (24, 32) fonctionnant de manière défectueuse.

2. Système de freinage électromécanique selon la revendication 1, **caractérisé en ce qu'au** moins l'un des actionneurs (12, 14, 18, 20) se voit associé respectivement l'un des appareils d'alimentation en énergie (24, 32, 40) en tant que source secondaire qui ne lui est pas associé en tant que source primaire.

3. Système de freinage électromécanique selon l'une quelconque des revendications précédentes, **caractérisé en ce qu'au** moins l'un des actionneurs (12, 14, 18, 20) présente un appareil d'absorption d'énergie (30) primaire et un appareil d'absorption d'énergie (38) secondaire, respectivement pour la connexion à un appareil d'alimentation en énergie (24, 32, 40).

4. Système de freinage électromécanique selon la revendication 3, **caractérisé en ce qu'au** moins l'un des appareils d'absorption d'énergie (30, 38) présente une entrée de signal pour la réception d'un signal de commande pour la commande de l'actionneur (12, 14, 18, 20).

5. Système de freinage électromécanique selon la revendication 4, **caractérisé en ce que** l'appareil d'absorption d'énergie (30, 38) présentant l'entrée de signal est conçu pour l'absorption d'une puissance qui est inférieure à la puissance pour l'absorption de laquelle l'autre appareil d'absorption d'énergie (30, 38) respectivement est conçu.

6. Système de freinage électromécanique selon l'une quelconque des revendications précédentes, **caractérisé en ce qu'un** appareil de récupération (46) est associé à au moins l'un des actionneurs (12, 14, 18, 20) en tant que source secondaire.

7. Système de freinage électromécanique selon l'une quelconque des revendications précédentes, **caractérisé en ce qu'au** moins l'un des actionneurs (12, 14, 18, 20) se voit associé un troisième appareil d'alimentation en énergie (40) en tant que source secondaire.

8. Système de freinage électromécanique selon l'une quelconque des revendications précédentes, **caractérisé en ce que** l'une des connexions entre l'un des actionneurs (12, 14, 18, 20) et l'appareil d'alimentation en énergie (24, 32, 40) qui lui est associé en tant que source secondaire présente une connexion électrique directe.

9. Système de freinage électromécanique selon l'une quelconque des revendications précédentes, **caractérisé en ce que** l'une des connexions entre l'un des actionneurs (12, 14, 18, 20) et l'appareil d'alimentation en énergie (24, 32, 40) qui lui est associé en tant que source secondaire présente un appareil de commande (48) pour la commande et/ou la régulation d'un flux d'énergie entre la source secondaire et l'actionneur (12, 14, 18, 20).

10. Système de freinage électromécanique selon l'une quelconque des revendications précédentes, **caractérisé en ce que** les premiers actionneurs (12, 14) sont agencés au niveau d'au moins un essieu avant (16) du véhicule, dans lequel le premier appareil d'alimentation en énergie (24) est associé aux premiers actionneurs (12, 14) en tant que source primaire, et **en ce que** les seconds actionneurs (18, 20) sont agencés au niveau d'au moins un essieu arrière (22) du véhicule, dans lequel le deuxième appareil d'alimentation en énergie (32) est associé aux seconds actionneurs (18, 20) en tant que source primaire.

11. Système de freinage électromécanique selon l'une quelconque des revendications précédentes, **caractérisé par** un appareil de commande pour la commande d'une absorption d'énergie des appareils de freinage et/ou pour la commande d'une force de freinage des appareils de freinage.

12. Actionneur (12, 14, 18, 20), en particulier appareil de freinage électromécanique pour un système de freinage électromécanique présentant un appareil d'absorption d'énergie (30) primaire, un appareil d'absorption d'énergie (38) secondaire, respectivement pour la connexion avec un appareil d'alimentation en énergie (24, 32, 40) et un appareil de sélection pouvant être commandé pour la sélection de l'un des appareils d'alimentation en énergie (24, 32, 40) pour l'alimentation de l'actionneur (12, 14, 18, 20) en énergie électrique.

13. Actionneur selon la revendication 12, **caractérisé en ce que** l'appareil de sélection est conçu afin de sélectionner, en cas de dysfonctionnement de l'appareil d'alimentation en énergie (24, 32, 40) connecté à l'appareil d'absorption d'énergie (30) primaire, de l'énergie provenant de l'appareil d'alimentation en énergie (24, 32, 40) connecté à l'appareil d'absorption d'énergie (38) secondaire pour l'utilisation par l'actionneur (12, 14, 18, 20).

14. Véhicule, en particulier véhicule utilitaire, dans lequel le véhicule présente un système de freinage électromécanique selon l'une quelconque des revendications 1 à 11 ou un actionneur selon la revendication 12 ou 13.

15. Véhicule selon la revendication 14, **caractérisé en ce que** le véhicule présente un entraînement électrique.

16. Véhicule selon la revendication 15, **caractérisé en ce que** le véhicule présente une batterie de traction et/ou une pile à combustible.

17. Remorque pour un véhicule utilitaire, dans lequel la remorque présente un système de freinage électromécanique selon l'une quelconque des revendications 1 à 11 ou un actionneur selon la revendication 12 ou 13.

18. Combinaison de véhicule utilitaire, **caractérisée en ce que** la combinaison de véhicule utilitaire présente un véhicule selon l'une quelconque des revendications 14 à 16 et au moins une remorque selon la revendication 17.
